# FASCICULE DE BREVET EUROPEEN

(11) **EP 4 147 546 B1**
(45) Date de publication et mention de la délivrance du brevet: **03.07.2024**
(21) Numéro de dépôt: 22194496.0
(22) Date de dépôt: 08.09.2022
(51) Int. Cl.: A01B 3/46, A01B 59/043, A01B 63/16, A01B 73/00

(54) **CHARRUE RÉVERSIBLE PRÉSENTANT UNE SÉCURITÉ AMÉLIORÉE LORS DES CHANGEMENTS DE CONFIGURATION**
DREHPFLUG MIT VERBESSERTER SICHERHEIT BEI KONFIGURATIONSÄNDERUNGEN
REVERSIBLE PLOUGH WITH IMPROVED SAFETY DURING CONFIGURATION CHANGES

(30) Priorité: 10.09.2021 FR 2109486
(43) Date de publication de la demande: 15.03.2023
(73) Titulaire: Kuhn-Huard S.A.S, 44110 Chateaubriant (FR)
(72) Inventeur: DUCROQUET, Frédéric, 44110 VILLEPOT (FR); HERAULT, Vincent, 44470 MAUVES SUR LOIRE (FR)
(74) Mandataire: Hager, Esther Evelyne

(56) Documents cités:
- EP-A1- 2 974 581
- EP-B1- 0 474 520
- DE-A1-102018 115 863

## Description

La présente invention concerne le domaine du machinisme agricole, en particulier des machines portée, semi-portées ou tractées attelées à un véhicule tracteur lors de leur utilisation et leur transport, notamment les charrues du type porté réversible. Dans ce contexte, l'invention porte sur une charrue réversible présentant une sécurité améliorée lors des changements d'agencement ou de configuration, en particulier lors des changements entre les agencements ou configurations de travail et de transport de cette charrue.

L'invention vise les charrues réversibles du type comprenant, d'une part, un bâti portant des corps de labour et équipé d'au moins une roue et, d'autre part, une tête d'attelage avec une potence et un dispositif d'accrochage à trois points pour son accouplement avec un véhicule tracteur (par le biais d'une bielle supérieure et de deux bras de relevage inférieurs).

Le bâti comporte deux groupes de corps de labour, arrangés de part et d'autre pour un travail de labour respectivement à droite ou à gauche par rapport à la direction d'avance, et il est relié à la potence par une liaison pivot définissant un axe de retournement pour le passage réversible d'une configuration de travail à l'autre, par pivotement d'environ un demi-tour et préférentiellement sous l'effet d'un actionneur (cf. FR 2820603 et DE 10 2018 115863)

Ce type de charrue peut être transposée, par rotation d'un quart de tour environ du bâti depuis une des configurations de travail, en configuration de transport dans laquelle le point d'accrochage supérieur est mobile par rapport à la potence et la charrue est trainée par traction au niveau des deux points d'accrochage inférieurs et en roulant en appui sur ladite au moins une roue.

Plus précisément, la charrue occupe alternativement au moins une des positions de travail grâce au dispositif de retournement précité, ces opérations de retournement étant effectuées à l'occasion d'une inversion de la direction d'avance du tracteur dans la parcelle à labourer (allers-retours successifs séparés par des demi-tours).

D'une manière générale, ces charrues sont portées au cours des déplacements dans les champs et sont, selon leur poids, portées ou traînées lors des déplacements sur route. Pour des charrues présentant un nombre de corps important (généralement plus de 4), la charrue repose partiellement lors des déplacements sur une roue. Il est courant d'utiliser la roue de régulation (qui détermine la profondeur de labour au travail) comme roue de transport, on parle alors de roue combinée (cf. FR 2820603). Une telle roue combinée doit alors remplir la fonction de contrôle de la profondeur de travail des corps de labour lors du travail et la fonction d'appui au sol de la charrue lors du transport. Toutefois, la mise en oeuvre de deux roues distinctes est également connue (chacune ayant alors une fonction spécifique).

Lorsque le dispositif de retournement pivote uniquement d'un quart de tour, le bâti passe d'une des positions de travail à la position de transport. Pendant le transport, le poids de la charrue est réparti entre les bras de relevage inférieurs du système d'attelage et la roue combinée, ou la roue de transport spécifique. La bielle supérieure est désaccouplée pour que la charrue puisse être traînée derrière le tracteur, en étant uniquement attachée par les bielles des bras inférieurs du système d'attelage pour épouser les éventuelles dénivellations du terrain. La charrue est alors trainée à l'arrière du tracteur comme une remorque.

Une fois la charrue dans sa position de transport et la roue appuyée sur le sol, il est nécessaire de bloquer le dispositif de retournement (verrou de retournement) pour empêcher toute rotation involontaire autour de l'axe de retournement, puis de décrocher la bielle supérieure du système d'attelage de la charrue (à savoir le rendre flottant par rapport à la potence). Une fois ces deux opérations réalisées, la charrue trainée peut circuler sur la route.

Pour sécuriser cet agencement de transport de la charrue, celle-ci comporte également un premier moyen de blocage en position du point d'accrochage supérieur par rapport à la potence et un second moyen de blocage en rotation de la liaison pivot, donc du retournement du bâti, lesquels sont engagés ou dégagés selon que la charrue est dans un état d'agencement pour le travail ou le transport,

Pour libérer simplement la bielle supérieure lorsque la charrue doit être trainée, la charrue peut éventuellement comporter une potence en deux parties, une partie avant et une partie arrière qui sont mobiles en rotation entre elles (cf. EP 0 474 520). La partie avant est reliée à la bielle supérieure et est susceptible de pivoter par rapport à la partie arrière autour d'un axe de potence sensiblement horizontal et perpendiculaire à l'axe de retournement. Les deux parties sont solidarisées et le pivotement bloqué lorsque le premier moyen de blocage est relevé.

Les deux opérations précitées (1-verrouiller la rotation en position transport puis 2-déverrouiller la bielle supérieure) doivent être réalisées l'une après l'autre et dans cet ordre par l'opérateur.

Il y a un risque notable d'accident si l'opérateur néglige l'une des deux opérations et même s'il ne respecte pas l'ordre de succession précité.

Il existe ainsi une demande effective, non satisfaite à ce jour, pour une charrue du type précité dont la mise en position de transport se fait toujours de manière sécurisée, sans risque d'erreur, ni d'oubli, et ce préférentiellement aussi de manière ergonomique.

La présente invention a pour but de répondre à cette demande.

A cet effet, elle a pour objet une charrue réversible du type mentionné ci-dessus et qui est caractérisée en ce qu'elle comprend en outre un dispositif de commande commune de l'état engagé/dégagé desdits premier et second moyens de blocage, ce dispositif étant configuré de manière à définir un ordre de succession des opérations d'actionnement ou de libération desdits premiers et seconds moyens de blocage respectivement vers leur état engagé ou leur état dégagé selon l'état d'agencement recherché pour la charrue

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1A] représente une charrue selon une première variante de réalisation de l'invention représentée en configuration de travail pour un labour à droite, ladite charrue présentant une roue combinée ;
[Fig. 1B] représente une charrue selon une seconde variante de réalisation de l'invention représentée en configuration de transport, ladite charrue présentant au moins une roue destinée à s'appuyer au sol dans la configuration de transport ;
[Fig. 2] est une vue en perspective d'une tête d'attelage selon l'invention pouvant faire partie de l'une des charrues représentées figures 1A et 1B ;
[Fig. 3A] et
[Fig. 3B] sont des vues partielles (la partie inférieure et certains composants étant enlevés), en élévation frontale (selon une direction opposée à la direction d'avance) et en perspective, de la tête d'attelage représentée figure 2, montrant plus précisément le dispositif de commande commune des moyens de blocage du point d'accrochage supérieur et de la rotation du bâti (blocage retournement) en accord avec l'invention ;
[Fig. 4A],

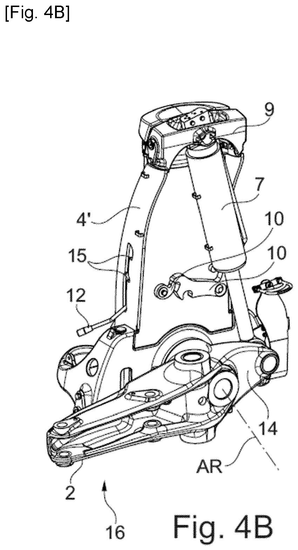

[Fig. 4B] et

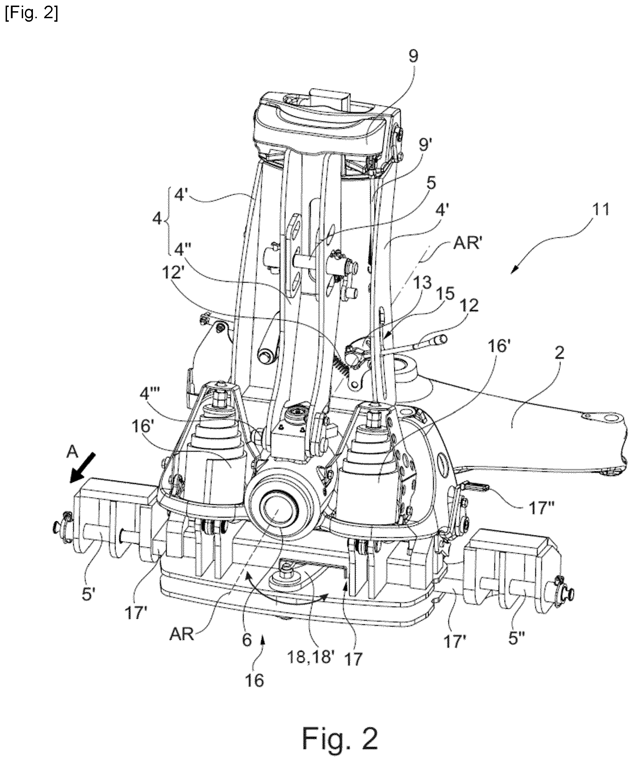

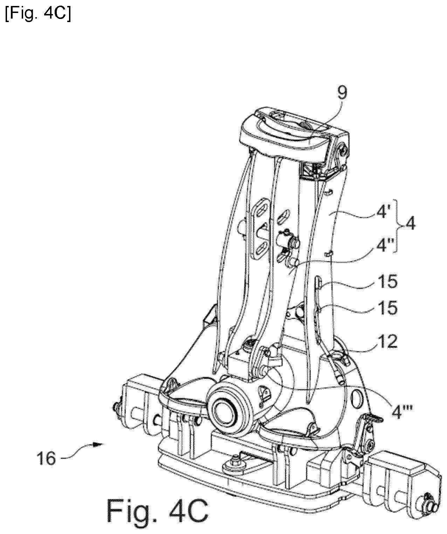

[Fig.4C] sont des vues partielles (certains composants étant enlevés), respectivement en élévation frontale et en perspective selon deux directions différentes de la tête d'attelage représentée sur la figure 2, le dispositif de commande commune étant dans un état associé à une configuration de travail de la charrue ;

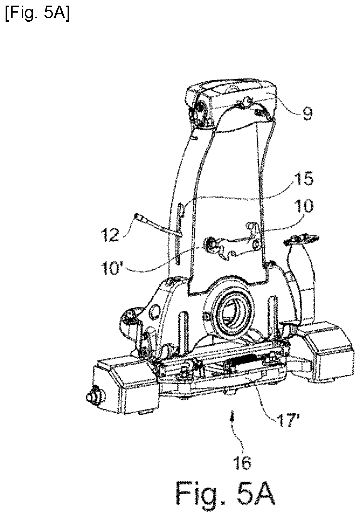

[Fig. 5A] et

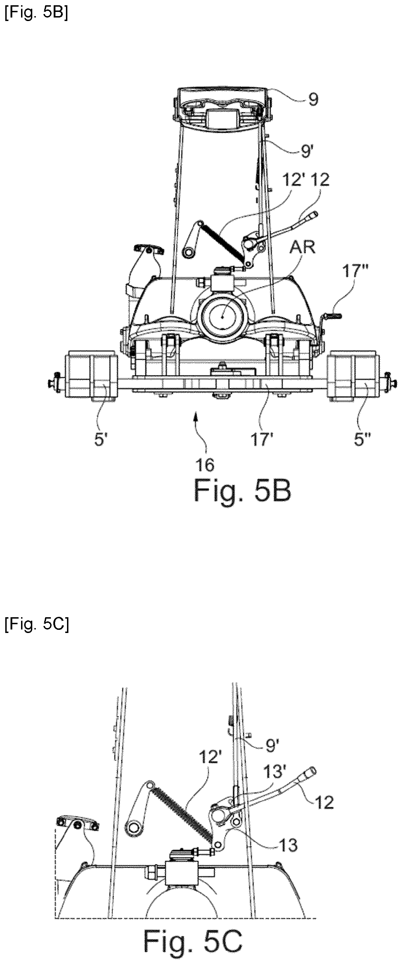

[Fig. 5B] sont des vues partielles en perspective et en élévation arrière de la tête d'attelage représentée sur la figure 2, le dispositif de commande commune étant dans un état intermédiaire transitoire ;

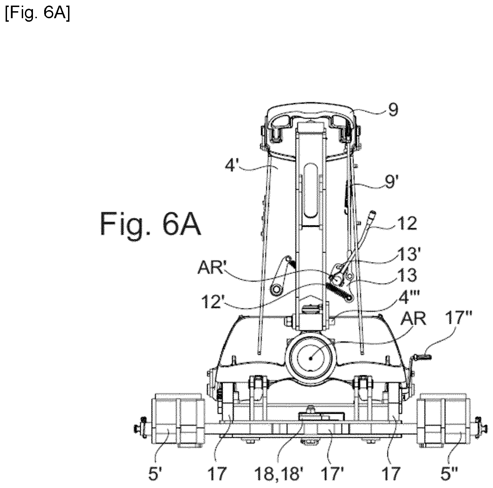

[Fig. 6A] et

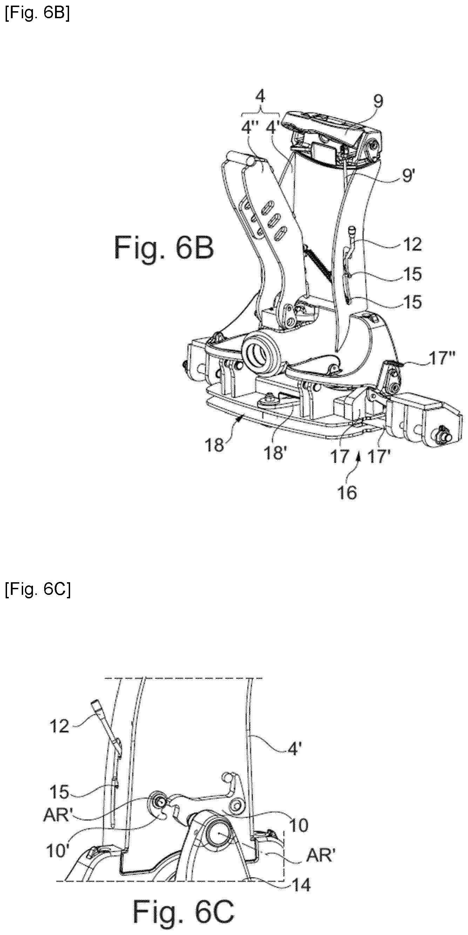

[Fig. 6B] sont des vues partielles en élévation frontale et en perspective de la tête d'attelage représentée sur la figure 2, le dispositif de commande commune étant dans un état associé à une configuration de transport de la charrue ;
[Fig. 5C] et
[Fig. 6C] sont des vues de détail à une autre échelle d'une partie des objets représentés respectivement sur la figure 5B (figure 5C) et sur les figures 6A et 6B (figure 6C - vue en perspective arrière).

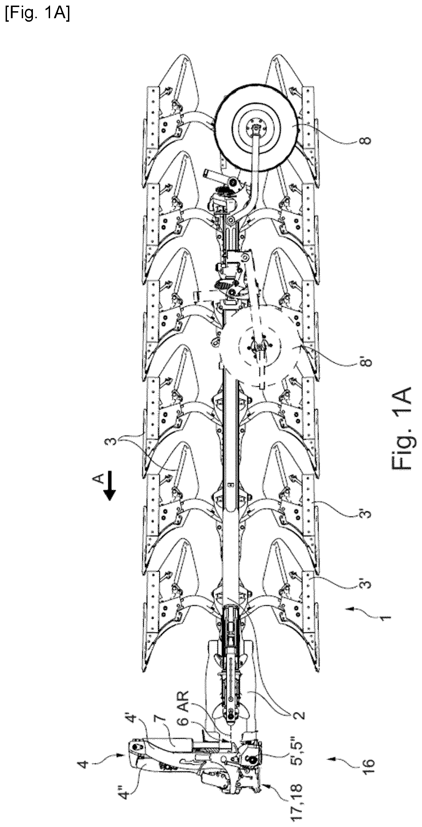

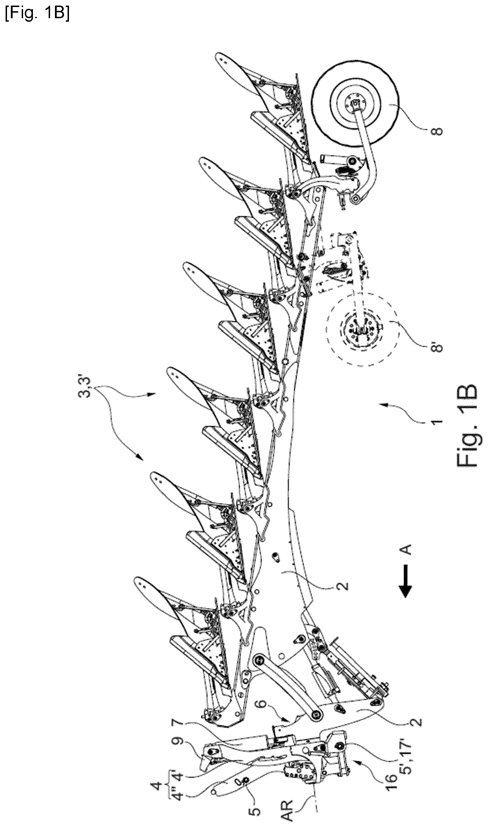

Les figures 1 et 2 illustrent, au moins en partie, une charrue réversible (1) comprenant, d'une part, un bâti (2) portant des corps de labour (3, 3') et équipé d'au moins une roue (8, 8') et, d'autre part, une tête d'attelage (16) avec une potence (4) et un dispositif d'accrochage à trois points (5, 5', 5") pour son accouplement avec un véhicule tracteur. Le bâti (2) comporte deux groupes de corps de labour (3, 3'), arrangés de part et d'autre pour un travail de labour respectivement à droite ou à gauche par rapport à la direction d'avance (A). ce bâti (2) est relié à la potence (4) par une liaison pivot (6) définissant un axe de retournement (AR) pour le passage réversible d'une configuration de travail à l'autre, par pivotement d'environ un demi-tour et préférentiellement sous l'effet d'un actionneur (7). Cette charrue (1) peut également être transposée, par rotation d'un quart de tour environ du bâti (2) autour de l'axe de retournement (AR), depuis une des configurations de travail, en configuration de transport. Dans cette dernière configuration, le point d'accrochage supérieur (5) est mobile par rapport à la potence (4) et la charrue (1) peut être trainée par traction au niveau des deux points d'accrochage inférieurs (5', 5") et en roulant en appui sur ladite au moins une roue (8). Cette charrue (1) comporte également un premier moyen (9) de blocage en position du point d'accrochage supérieur (5) par rapport à la potence (4) et un second moyen (10) de blocage en rotation de la liaison pivot (6), donc de la rotation du bâti (2). Ces moyens de blocage sont engagés ou dégagés selon que la charrue (1) est dans une des configurations travail ou dans la configuration de transport.

Conformément à l'invention, la charrue (1) comprend en outre un dispositif (11) de commande commune de l'état engagé/dégagé desdits premier et second moyens de blocage (9 et 10), ce dispositif (11) étant configuré de manière à définir un ordre de succession des opérations d'actionnement ou de libération desdits premiers et seconds moyens de blocage (9 et 10) respectivement vers leur état engagé ou leur état dégagé selon la configuration recherchée pour la charrue (1).

Grâce aux dispositions spécifiques précitées, et par la commande unique, centralisée et séquentielle fournit par l'invention, il peut garantir que toute rotation du bâti (2) autour de l'axe de retournement (AR) est empêchée en configuration de transport, c'est-à-dire lorsque le point d'accrochage supérieur (5) est libéré et autorisé à se déplacer (par exemple en pivotement par rapport aux points d'accrochage inférieurs 5', 5") par rapport à la potence (4) pour une circulation sur chemin et route. Le dispositif de commande (11) s'étend avantageusement dans un espace situé entre un plan horizontal passant par le point d'accrochage supérieur (5) et un plan horizontal passant par les points d'accrochage inférieurs (5', 5"). Plus précisément, le dispositif de commande (11) s'étend dans l'espace situé entre un plan horizontal passant par le point d'accrochage supérieur (5) et un plan horizontal contenant l'axe de retournement (AR), tel que représenté sur la figure 2. De plus, ce dispositif (11) de commande séquentielle et centralisée est préférentiellement entièrement intégré à la potence (4), ses composants constitutifs étant avantageusement tous montés sur la partie fixe (4") de cette potence.

La figure 1A illustre une machine sous forme de charrue réversible (1) dans sa configuration de travail, ici labour à droite. Dans la configuration de travail, la charrue (1) est accrochée au dispositif d'attelage trois points du véhicule tracteur, on dit que la charrue est portée. La roue (8, 8') sert au contrôle de la profondeur de travail des corps de labour (3, 3'). Cette roue (8, 8') est implantée soit à l'arrière du bâti (2) ou soit latéralement sur le bâti (2). Lors de la configuration de transport telle que représentée sur la figure 1B, la machine agricole (1), et particulièrement la charrue, repose au sol à l'arrière au moyen de la roue (8, 8') et à l'avant via les deux points d'attelage inférieurs (5', 5") du dispositif d'accrochage trois points. Au transport, la bielle supérieure, qui est associée au point d'attelage supérieur (5'), est désaccouplée pour que la charrue (1) puisse être traînée derrière le tracteur (uniquement attachée par les points d'attelage inférieurs) pour épouser les éventuelles dénivellations du terrain. La charrue (1) est alors trainée ou semi-portée à l'arrière du tracteur comme une remorque. Ainsi, on dit qu'une telle charrue est portée au travail et semi-portée au transport. Sur les figures 1A et 1B, la roue (8) montée en position arrière sur le bâti (2) est représentée en traits continus et la roue (8') montée en latérale est représentée en traits discontinus. La charrue (1) est équipée soit de la roue arrière, soit de la roue latérale. Lorsque la roue remplie la fonction de réglage de profondeur de travail et la fonction d'appui au sol au transport, on parle d'une roue combinée. Les roues (8 et 8') représentées sur les figures sont des roues combinées.

La figure 2 illustre la tête d'attelage (16) d'une machine agricole (1), et notamment le dispositif d'attelage trois points et le dispositif de traverse (17') formant palonnier, et une partie avant du bâti (2), dans l'une des positions de travail de la charrue (1). Cette tête d'attelage (16) est équipée d'une suspension, sous forme de ressorts volute (16'), disposée à l'avant de part et d'autre de l'axe de retournement (AR).

En accord avec un mode de construction avantageux, ressortant des figures 2 à 6, le dispositif de commande commune (11) comprend un mécanisme de manoeuvre, articulé et monté sur la potence (4), avec un organe primaire (12) de manipulation (actionnable par l'utilisateur), avec deux organes secondaires (9', 10') d'actionnement ou de libération, respectivement des premier et second moyens de blocage (9 et 10), et avec une pièce centrale (13) assurant la liaison cinématique entre l'organe primaire (12) et les deux organes secondaires (9', 10'). Il est ainsi proposé un dispositif de construction simple et formé d'un nombre limité de composants constitutifs (9', 10', 12, 13).

En vue d'aboutir de manière simple et fiable au séquencement opérationnel recherché, la pièce centrale (13) intègre avantageusement un retard de commande opérationnelle, par exemple sous la forme d'une plage morte cinématique, fixant l'ordre de succession des opérations d'actionnement ou de libération desdits premiers et seconds moyens de blocage (9 et 10). Ces derniers se présentent avantageusement sous la forme de verrous. La plage morte cinématique est associée au premier moyen de blocage (9), concerné en second lieu par la séquence opérationnelle exécutée par la manipulation de l'organe primaire (12), et peut par exemple se présenter sous la forme d'une possibilité de libre déplacement relatif (sans entrainement) entre la pièce centrale (13) et l'organe secondaire (9') associé audit premier organe de blocage (9). L'organe secondaire (9') est relié à la pièce centrale (13), et plus particulièrement au niveau de la plage morte cinématique. La plage morte cinématique est ménagée dans la pièce centrale (13) latéralement par rapport à l'axe de rotation (AR') de la pièce centrale (13). L'organe secondaire (9') est avantageusement une tige disposée verticalement le long de la potence (4).

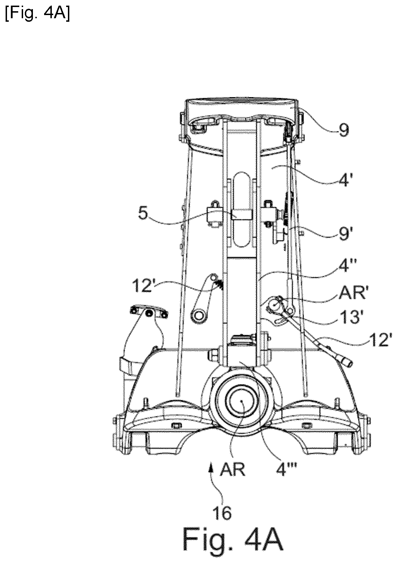

Préférentiellement, et comme cela ressort des figures 4 à 6, le dispositif de commande commune (11) est configuré (fonctionnellement et constructivement) pour pouvoir prendre trois états distincts, correspondant à trois positions respectivement correspondantes de l'organe primaire de manipulation (12), à savoir, en fonction de positions successives discrètes dudit organe primaire de manipulation (12) : un premier état associé à la configuration de travail et dans lequel le premier moyen de blocage (9) est engagé et le second moyen de blocage (10) est dégagé ; un deuxième état intermédiaire neutre ou de transition dans lequel second moyen de blocage (10) vient en engagement et le premier moyen de blocage (9) reste engagé ; et, enfin, un troisième état associé à la configuration de transport et dans lequel le premier moyen de blocage (9) est dégagé et le second moyen de blocage (10) est engagé. Le premier état est associé à une configuration de travail de la charrue (1) et le troisième état est associé à la configuration de transport de ladite charrue (1).

Selon un mode de réalisation très avantageux de la tête d'attelage (16), montré sur les figures 2 à 6, la potence (4) comprend deux parties constitutives (4' et 4"), à savoir une partie arrière (4') formant un châssis de potence fixe et une partie avant (4") formant un bras articulé à pivotement avec la partie arrière (4'). La partie avant (4") porte le point d'accrochage supérieur (5). Une articulation à pivot (4‴) relie avantageusement les extrémités inférieures des deux parties de potence. Ces deux parties (4' et 4") peuvent être reliées rigidement de manière sélective par le premier moyen de blocage (9), ce dernier se présentant sous la forme d'une anse ou casquette montée pivotante sur la partie arrière (4'). Le premier moyen de blocage (9) peut mutuellement assujettir les parties arrière et avant (4' et 4") à l'opposé de leur articulation à pivot (4‴) et déplaçable entre ses états engagé et dégagé sous l'action d'un organe secondaire (9') correspondant faisant partie du dispositif de commande commune (11), par exemple une biellette.

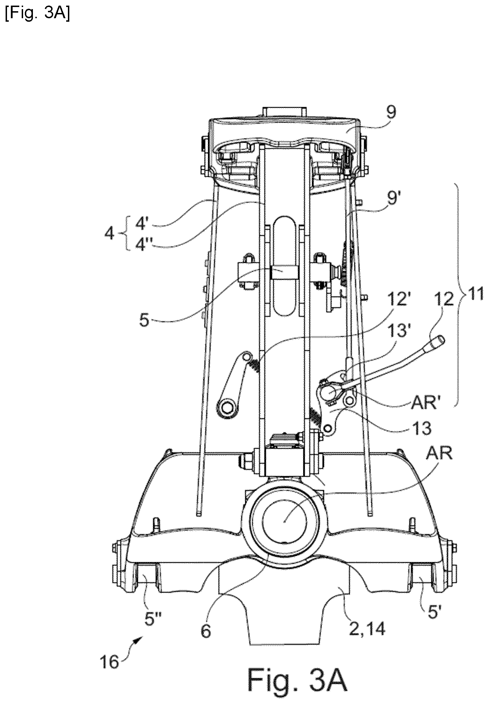

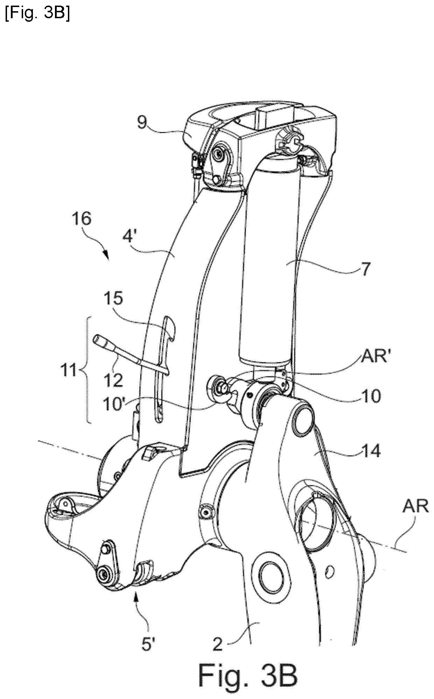

En accord avec une autre caractéristique constructive préférée de l'invention, ressortant des figures 3 à 6, le second moyen de blocage (10) consiste en un verrou, par exemple pivotant, sollicité dans son état engagé, dans lequel il empêche toute rotation autour de l'axe de retournement (AR), sous l'effet de son poids ou d'un moyen élastique. Le verrou ou second moyen de blocage (10) est déplacé dans son état dégagé sous l'action d'un organe secondaire (10') correspondant faisant partie du dispositif de commande commune (11), par exemple une came rotative. L'actionneur (7) est avantageusement relié au bâti (2) par une bielle (14) et le verrou (10) bloque ladite bielle (14) en position lorsqu'il est dans son état engagé. Ce verrou 10) engage automatiquement l'actionneur (7) ou préférentiellement la bielle (14), pour bloquer la rotation autour de l'axe de retournement (AR), lorsque le bâti (2) est en configuration de transport. Comme le montrent les figures 3b, 4B, 5A et 6C, la came rotative (10') peut par exemple comporter une excroissance sous forme de nez ou de crochet pouvant venir en engagement avec une excroissance contraire ou contre-crochet formé(e) sur l'extrémité libre du verrou pivotant (10) en vue du soulèvement de ce dernier. En outre, ce verrou (10) peut comporter un site de blocage apte à recevoir par exemple l'extrémité de l'axe de pivotement reliant la partie mobile de l'actionneur (7) avec la bielle (14), en vue du blocage de cette bielle, et donc du bâti (2), en rotation autour de l'axe de retournement (AR) en configuration de transport (figure 6C).

En relation avec les constructions précitées des premier et second moyens de blocage (9 et 10), et conformément à une variante pratique de réalisation préférée du dispositif de commande commune (11), ce dernier comprend un mécanisme de manoeuvre intégrant : i) un organe primaire de manipulation (12) sous la forme d'un levier ou d'une poignée, pouvant être positionné(e) et maintenu(e) dans trois positions discrètes, ii) une biellette (9') reliée au premier moyen de blocage (9) sous la forme d'une anse pivotante configurée pour solidariser mutuellement, dans son état engagé, les parties arrière et avant (4' et 4") de ladite potence (4), iii) une came rotative (10') configurée et arrangée pour interagir avec le second moyen de blocage (10) ou le verrou de blocage en rotation du bâti (2) autour de l'axe de retournement (AR) en vue de l'extraire de son état engagé par défaut et iiii) une pièce centrale (13) sur laquelle est montée le levier ou la poignée (12) et qui est reliée cinématiquement à la biellette (9') et à la came (10'), ladite pièce centrale (13) étant fixée avec faculté de rotation sur la partie arrière (4') de la potence (4).

Dans le contexte de cette variante pratique de réalisation, il peut en outre être prévu que l'axe de rotation de la came (10') soit confondu avec l'axe de rotation (AR') de la pièce centrale (13). La pièce centrale (13) est montée sur la partie arrière (4') au moyen d'un axe de rotation (AR'). Cette pièce centrale (13) peut notamment se présenter sous la forme d'une plaque découpée, dont le plan est perpendiculaire audit axe de rotation (AR'), et la biellette (9') est avantageusement reliée cinématiquement à ladite plaque (13) au niveau d'un trou oblong (13'), dans lequel peut circuler ladite biellette (9') et qui est préférentiellement en forme d'arc de cercle. Ce trou oblong (13') forme une plage morte cinématique générant un retard de transmission de mouvement lors du déplacement en rotation de ladite plaque (13) sous l'effet du levier ou de la poignée (12). L'axe de rotation (AR') de la pièce centrale (13) est sensiblement parallèle à l'axe de retournement (AR) de la charrue.

Ce levier (12) articulée sur la potence (4) est avantageusement situé à une hauteur optimale entre les deux points d'accrochage inférieurs (5', 5") et le point d'accrochage supérieur (5), ce qui le rend facile d'accès en étant positionné ergonomiquement. En outre, du fait même de son extension, ce levier (12) fournit un bras de levier important pour l'entrainement en rotation de la pièce centrale (13) autour de l'axe (AR').

Afin de visualiser et de concrétiser physiquement les trois positions du levier (12), la potence (4) comporte des encoches ou des crans (15) pour la réception (préférentiellement avec calage et sécurisation contre une extraction non intentionnelle) du levier de manipulation (12) dans ses trois positions, correspondant aux trois états possibles du dispositif de commande commune (11). Dans l'exemple de réalisation représenté, les encoches (15) sont ménagées dans une paroi latérale de la partie arrière (4') -par exemple à section en U ou en H- de la potence (4) et sont reliées entre elles par un couloir de circulation pour le levier (12).

Avantageusement, et à titre de sécurité de manoeuvre, l'organe primaire de manipulation (12) est sollicité élastiquement vers une position correspondant à un état du dispositif de commande commune (11) dans lequel les premier et second moyens de blocage (9 et 10) sont tous deux engagés. Cette sollicitation peut être effective uniquement lorsque le levier (12) n'est pas logé dans l'une des encoches (c'est-à-dire lorsque le levier est en cours de manoeuvre) et le même élément (12') de sollicitation élastique, agissant par exemple sur la pièce centrale (13), peut aussi assurer le calage sécurisé dudit levier (12) lorsqu'il est reçu dans les différentes encoches (15).

Comme le montrent les figures 2 et 4C à titre de réalisation préférée, la tête d'attelage (16) peut comprendre une traverse d'attelage (17') formant palonnier, et également un dispositif (17) de verrouillage en rotation de sa traverse d'attelage (17'), préférentiellement à deux verrous et à commande unique, et/ou un dispositif (18) de blocage automatique en translation de ladite traverse (17'). La traverse (17') est montée, avec faculté de rotation et de translation limitées, par une liaison pivot/glissière entre deux plaques arrangées sous la potence (4) (figures 2, 4C, 5A, 5B et 6A). La rotation est limitée par des butées avant et arrière et la translation par la glissière. La commande unique précitée des deux verrous de verrouillage bloquant en rotation peut par exemple consister en une poignée (17") et le dispositif (18) de blocage en translation peut comprendre un moyen d'accrochage (18') sous la forme d'un bras ou cliquet pivotant pouvant venir en engagement, sous sollicitation élastique, avec le pivot de guidage translatif et rotatif dans la glissière de la traverse (17'), pour le verrouiller en translation selon la direction d'avance (A).

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention tel que défini par les revendications annexées.

## Revendications

1. Charrue réversible (1) comprenant, d'une part, un bâti (2) portant des corps de labour (3, 3') et équipé d'au moins une roue (8, 8') et, d'autre part, une tête d'attelage (16) avec une potence (4) et un dispositif d'accrochage à trois points (5, 5', 5") pour son accouplement avec un véhicule tracteur,
le bâti (2) comportant deux groupes de corps de labour (3, 3'), arrangés de part et d'autre pour un travail de labour respectivement à droite ou à gauche par rapport à la direction d'avance (A), et étant relié à la potence (4) par une liaison pivot (6) définissant un axe de retournement (AR) pour le passage réversible d'une configuration de travail à l'autre, par pivotement d'environ un demi-tour et préférentiellement sous l'effet d'un actionneur (7),
ladite charrue (1) pouvant également être transposée, par rotation d'un quart de tour environ du bâti (2) autour de l'axe de retournement (AR), depuis une des configurations de travail, en configuration de transport dans laquelle le point d'accrochage supérieur (5) est mobile par rapport à la potence (4) et dans laquelle la charrue (1) peut être trainée par traction au niveau des deux points d'accrochage inférieurs (5', 5") et en roulant en appui sur ladite au moins une roue (8),
ladite charrue (1) comportant également un premier moyen (9) de blocage en position du point d'accrochage supérieur (5) par rapport à la potence (4) et un second moyen (10) de blocage en rotation de la liaison pivot (6), donc de la rotation du bâti (2), lesquels moyens de blocage sont engagés ou dégagés selon que la charrue (1) est dans une des configurations de travail ou dans la configuration de transport,
charrue (1) **caractérisée en ce qu'**elle comprend en outre un dispositif (11) de commande commune de l'état engagé/dégagé desdits premier et second moyens de blocage (9 et 10), ce dispositif (11) étant configuré de manière à définir un ordre de succession des opérations d'actionnement ou de libération desdits premiers et seconds moyens de blocage (9 et 10) respectivement vers leur état engagé ou leur état dégagé selon la configuration recherchée pour la charrue (1).

2. Charrue selon la revendication 1, **caractérisée en ce que** le dispositif de commande commune (11) comprend un mécanisme de manoeuvre, articulé et monté sur la potence (4), avec un organe primaire (12) de manipulation, avec deux organes secondaires (9', 10') d'actionnement ou de libération, respectivement des premier et second moyens de blocage (9 et 10), et avec une pièce centrale (13) assurant la liaison cinématique entre l'organe primaire (12) et les deux organes secondaires (9', 10').

3. Charrue selon la revendication 2, **caractérisée en ce que** la pièce centrale (13) intègre un retard de commande opérationnelle, par exemple sous la forme d'une plage morte cinématique, fixant l'ordre de succession des opérations d'actionnement ou de libération desdits premiers et seconds moyens de blocage (9 et 10), ces derniers se présentant avantageusement sous la forme de verrous.

4. Charrue selon l'une quelconque des revendications 1 à 3, **caractérisée en ce que** le dispositif de commande commune (11) est configuré pour pouvoir prendre trois états distincts, correspondant à trois positions respectivement correspondantes de l'organe primaire de manipulation (12), à savoir, en fonction de positions successives discrètes dudit organe primaire de manipulation (12) : un premier état associé à la configuration de travail et dans lequel le premier moyen de blocage (9) est engagé et le second moyen de blocage (10) est dégagé; un deuxième état intermédiaire neutre ou de transition dans lequel second moyen de blocage (10) vient en engagement et le premier moyen de blocage (9) reste engagé ; et, enfin, un troisième état associé à la configuration de transport et dans lequel le premier moyen de blocage (9) est dégagé et le second moyen de blocage (10) est engagé, le premier état étant associé à une configuration de travail de la charrue (1) et le troisième état étant associé à la configuration de transport de ladite charrue (1).

5. Charrue selon l'une quelconque des revendications 1 à 4, **caractérisée en ce que** la potence (4) comprend deux parties constitutives (4' et 4"), à savoir une partie arrière (4') formant un châssis de potence fixe et une partie avant (4") formant un bras articulé à pivotement avec la partie arrière (4') et portant le point d'accrochage supérieur (5), ces deux parties (4' et 4") pouvant être reliées rigidement de manière sélective par le premier moyen de blocage (9), ce dernier se présentant sous la forme d'une anse ou casquette montée pivotante sur la partie arrière (4'), pouvant mutuellement assujettir les parties arrière et avant (4' et 4") à l'opposé de leur articulation à pivot (4‴) et déplaçable entre ses états engagé et dégagé sous l'action d'un organe secondaire (9') correspondant faisant partie du dispositif de commande commune (11).

6. Charrue selon l'une quelconque des revendications 1 à 5, **caractérisée en ce que** le second moyen de blocage (10) consiste en un verrou, par exemple pivotant, sollicité dans son état engagé, dans lequel il empêche toute rotation autour de l'axe de retournement (AR), sous l'effet de son poids ou d'un moyen élastique, et déplacé dans son état dégagé sous l'action d'un organe (10') correspondant faisant partie du dispositif de commande commune (11), par exemple une came rotative, l'actionneur (7) éventuellement présent étant avantageusement relié au bâti (2) par une bielle (14) et le second moyen de blocage (10) bloquant ladite bielle (14) en position dans son état engagé.

7. Charrue selon les revendications 5 et 6, **caractérisée en ce que** le dispositif de commande commune (11) comprend un mécanisme de manoeuvre intégrant : i) un organe de manipulation (12) sous la forme d'un levier ou d'une poignée, pouvant être positionné(e) et maintenu(e) dans trois positions discrètes, ii) une biellette (9') reliée au premier moyen de blocage (9) sous la forme d'une anse pivotante configurée pour solidariser mutuellement, dans son état engagé, les parties arrière et avant (4' et 4") de ladite potence (4), iii) une came rotative (10') configurée et arrangée pour interagir avec le verrou de blocage en rotation du bâti (2) autour de l'axe de retournement (AR) en vue de l'extraire de son état engagé par défaut et iiii) une pièce centrale (13) sur laquelle est montée le levier ou la poignée (12) et qui est reliée cinématiquement à la biellette (9') et à la came (10'), ladite pièce centrale (13) étant fixée avec faculté de rotation sur la partie arrière (4') de la potence (4).

8. Charrue selon la revendication 7, **caractérisée en ce que** l'axe de rotation de la came (10') est confondu avec l'axe de rotation (AR') de la pièce centrale (13), **en ce que** cette dernière se présente sous la forme d'une plaque découpée, dont le plan est perpendiculaire audit axe de rotation (AR'), et **en ce que** la biellette (9') est reliée cinématiquement à ladite plaque (13) au niveau d'un trou oblong (13'), dans lequel peut circuler ladite biellette (9'), formant une plage morte cinématique générant un retard de transmission de mouvement lors du déplacement en rotation de ladite plaque (13) sous l'effet du levier ou de la poignée (12).

9. Charrue selon les revendications 4 et 7, **caractérisée en ce que** la potence (4) comporte des encoches ou des crans (15) pour la réception du levier de manipulation (12) dans ses trois positions, correspondant aux trois états possibles du dispositif de commande commune (11).

10. Charrue selon l'une quelconque des revendications 1 à 9, **caractérisée en ce que** l'organe primaire de manipulation (12) est sollicité élastiquement vers une position correspondant à un état du dispositif de commande commune (11) dans lequel les premier et second moyens de blocage (9 et 10) sont tous deux engagés.

11. Charrue selon l'une quelconque des revendications 1 à 10, **caractérisée en ce que** la tête d'attelage (16) comprend une traverse d'attelage (17') formant palonnier, et également un dispositif (17) de verrouillage en rotation de cette traverse d'attelage (17'), préférentiellement à deux verrous et à commande unique, et/ou un dispositif (18) de blocage automatique en translation de ladite traverse (17').

## Patentansprüche

1. Wendepflug (1), der einerseits ein Gestell (2), das Pflugkörper (3, 3') trägt und mit mindestens einem Rad (8, 8') ausgestattet ist, und andererseits einen Kupplungskopf (16) mit einem Tragarm (4) und einer Dreipunktkupplungsvorrichtung (5, 5', 5") zu seiner Verbindung mit einem Zugfahrzeug umfasst,
wobei das Gestell (2) zwei Gruppen von Pflugkörpern (3, 3') umfasst, die auf beiden Seiten für eine Pflugarbeit jeweils rechts oder links in Bezug auf die Vorschubrichtung (A) angeordnet sind, und mit dem Tragarm (4) durch eine Drehgelenkverbindung (6) verbunden ist, die eine Wendeachse (AR) für den umkehrbaren Übergang von einer Arbeitskonfiguration zur anderen definiert, durch Schwenken um etwa eine halbe Umdrehung und vorzugsweise unter der Wirkung eines Betätigungselements (7),
wobei der Pflug (1) ebenfalls durch Drehen des Gestells (2) um etwa eine Vierteldrehung um die Wendeachse (AR) aus einer der Arbeitskonfigurationen in eine Transportkonfiguration überführt werden kann, in der der obere Kupplungspunkt (5) in Bezug auf den Tragarm (4) beweglich ist und der Pflug (1) durch Ziehen an den beiden unteren Kupplungspunkten (5', 5") und durch abgestütztes Rollen auf dem mindestens einen Rad (8) gezogen wird,
wobei der Pflug (1) auch ein erstes Mittel (9) umfasst, um den oberen Kupplungspunkt (5) in Bezug auf den Tragarm (4) in der Position festzuhalten, und ein zweites Mittel (10) zur Drehblockierung der Drehgelenkverbindung (6), also der Drehung des Gestells (2), wobei diese Blockiermittel je nachdem, ob sich der Pflug (1) in einer der Arbeitskonfigurationen oder in der Transportkonfiguration befindet, in Eingriff oder außer Eingriff gebracht werden,
wobei der Pflug (1) **dadurch gekennzeichnet ist, dass** er ferner eine Vorrichtung (11) zur gemeinsamen Steuerung des Eingriffs- bzw. Freigabezustands der ersten und zweiten Blockiermittel (9 und 10) umfasst, wobei diese Vorrichtung (11) ausgestaltet ist, eine Abfolge von Betätigungs- oder Freigabevorgängen der ersten und zweiten Blockiermittel (9 und 10) in ihren jeweiligen Eingriffs- oder Freigabezustand entsprechend der gewünschten Konfiguration für den Pflug (1) festzulegen.

2. Pflug nach Anspruch 1, **dadurch gekennzeichnet, dass** die Vorrichtung zur gemeinsamen Steuerung (11) einen Manövriermechanismus umfasst, der am Tragarm (4) gelenkig gelagert und montiert ist, mit einem primären Handhabungselement (12), mit zwei sekundären Betätigungs- oder Freigabeelementen (9', 10') für die ersten bzw. zweiten Blockiermittel (9 und 10), und mit einem Mittelstück (13), das die kinematische Verbindung zwischen dem primären Element (12) und den beiden sekundären Elementen (9', 10') sicherstellt.

3. Pflug nach Anspruch 2, **dadurch gekennzeichnet, dass** das Mittelstück (13) eine operative Steuerverzögerung integriert, beispielsweise in Form eines kinematischen Totbereichs, der die Reihenfolge der Betätigungs- oder Freigabevorgänge der ersten und zweiten Blockiermittel (9 und 10) festlegt, wobei Letztere vorteilhafterweise in Form von Sperren vorliegen.

4. Pflug nach irgendeinem der Ansprüche 1 bis 3, **dadurch gekennzeichnet, dass** die Vorrichtung zur gemeinsamen Steuerung (11) so ausgestaltet ist, dass sie drei verschiedene Zustände einnehmen kann, die drei jeweils entsprechenden Positionen des primären Handhabungselements (12) entsprechen, d. h. in Abhängigkeit von diskreten aufeinanderfolgenden Positionen des primären Handhabungselements (12): einen ersten Zustand, welcher der Arbeitskonfiguration zugehörig ist und in dem das erste Blockiermittel (9) in Eingriff steht und das zweite Blockiermittel (10) gelöst ist; einen zweiten neutralen oder übergehenden Zwischenzustand, in dem das zweite Blockiermittel (10) in Eingriff kommt und das erste Blockiermittel (9) in Eingriff bleibt; und schließlich einen dritten Zustand, welcher der Transportkonfiguration zugehörig ist und in dem das erste Blockiermittel (9) gelöst und das zweite Blockiermittel (10) in Eingriff ist, wobei der erste Zustand einer Arbeitskonfiguration des Pfluges (1) zugehörig ist und der dritte Zustand einer Transportkonfiguration des Pfluges (1) zugehörig ist.

5. Pflug nach irgendeinem der Ansprüche 1 bis 4, **dadurch gekennzeichnet, dass** der Tragarm (4) zwei Bestandteile (4' und 4") umfasst, d. h. einen Hinterteil (4'), der einen festen Tragarmrahmen bildet, und einen Vorderteil (4"), der einen Arm bildet, der mit dem Hinterteil (4') schwenkbar gelenkig verbunden ist, und den oberen Kupplungspunkt (5) trägt, wobei diese beiden Teile (4' und 4") selektiv durch das erste Blockiermittel (9) starr miteinander verbunden werden können, wobei Letzteres die Form eines Henkels oder einer Kappe hat, der bzw. die schwenkbar am Hinterteil (4') angebracht ist, die Hinter- und Vorderteile (4' und 4") gegenüber ihrem Drehgelenk (4‴) gegenseitig sichern kann und unter der Wirkung eines entsprechenden sekundären Elements (9'), das Teil der Vorrichtung zur gemeinsamen Steuerung (11) ist, zwischen seinem eingreifenden und seinem gelösten Zustand verschiebbar sein kann.

6. Pflug nach irgendeinem der Ansprüche 1 bis 5, **dadurch gekennzeichnet, dass** das zweite Blockiermittel (10) aus einer zum Beispiel schwenkbaren Sperre besteht, die in ihrem Eingriffszustand beansprucht ist, in welchem sie jegliche Drehung um die Wendeachse (AR) unter der Wirkung ihres Gewichts oder eines elastischen Mittels verhindert, und die unter der Wirkung eines entsprechenden sekundären Elements (10'), das Teil der Vorrichtung zur gemeinsamen Steuerung (11) ist, zum Beispiel eines drehbaren Nockens, in ihren gelösten Zustand bewegt wird, wobei das eventuell vorhandene Betätigungselement (7) vorteilhafterweise über eine Stange (14) mit dem Gestell (2) verbunden ist und das zweite Blockiermittel (10) die Stange (14) in ihrer Position blockiert, wenn es sich in seinem eingreifenden Zustand befindet.

7. Pflug nach den Ansprüchen 5 und 6, **dadurch gekennzeichnet, dass** die Vorrichtung zur gemeinsamen Steuerung (11) einen Manövriermechanismus umfasst, der umfasst: i) ein Handhabungselement (12) in Form eines Hebels oder eines Griffs, der in drei diskreten Positionen positioniert und gehalten werden kann, ii) eine Lenkstange (9'), die mit dem ersten Blockiermittel (9) verbunden ist, in Form eines schwenkbaren Henkels, der ausgestaltet ist, in seinem eingreifenden Zustand die Hinter- und Vorderteile (4' und 4") des Tragarms (4) fest miteinander zu verbinden, iii) einen drehbaren Nocken (10'), der ausgestaltet und angeordnet ist, mit der Sperre zum Blockieren der Drehung des Gestells (2) um die Wendeachse (AR) zusammenzuwirken, um sie aus ihrem standardmäßig eingreifenden Zustand herauszuziehen, und iiii) ein Mittelstück (13), auf dem der Hebel oder der Griff (12) montiert ist und das kinematisch mit der Lenkstange (9') und dem Nocken (10') verbunden ist, wobei das Mittelstück (13) drehbar am Hinterteil (4') des Tragarms (4) befestigt ist.

8. Pflug nach Anspruch 7, **dadurch gekennzeichnet, dass** die Drehachse des Nockens (10') mit der Drehachse (AR') des Mittelstücks (13) zusammenfällt, dass Letzteres in Form einer gestanzten Platte vorliegt, deren Ebene senkrecht zu der Drehachse (AR') ist, und dass die Lenkstange (9') mit der Platte (13) an einem Langloch (13') kinematisch verbunden ist, in dem die Lenkstange (9') zirkulieren kann, wodurch ein kinematischer Totbereich gebildet wird, der eine Verzögerung der Bewegungsübertragung bei der Drehbewegung der Platte (13) unter der Wirkung des Hebels oder des Griffs (12) erzeugt.

9. Pflug nach den Ansprüchen 4 und 7, **dadurch gekennzeichnet, dass** der Tragarm (4) Aussparungen oder Ausschnitte (15) zur Aufnahme des Handhabungshebels (12) in seinen drei Positionen umfasst, die den drei möglichen Zuständen der Vorrichtung zur gemeinsamen Steuerung (11) entsprechen.

10. Pflug nach irgendeinem der Ansprüche 1 bis 9, **dadurch gekennzeichnet, dass** das primäre Handhabungselement (12) in eine Position elastisch belastet wird, die einem Zustand der Vorrichtung zur gemeinsamen Steuerung (11) entspricht, in dem sowohl das erste als auch das zweite Blockiermittel (9 und 10) in Eingriff sind.

11. Pflug nach irgendeinem der Ansprüche 1 bis 10, **dadurch gekennzeichnet, dass** der Kupplungskopf (16) einen Kupplungsquerträger (17'), der einen Hebebalken bildet, und auch eine Drehverriegelungsvorrichtung (17) für diesen Kupplungsquerträger (17'), vorzugsweise mit zwei Sperren und einer Einzelsteuerung, und/oder eine Vorrichtung (18) zur automatischen translatorischen Blockierung des Querträgers (17') umfasst.

## Claims

1. Reversible plow (1) comprising, on the one hand, a frame (2) carrying plowbodies (3, 3') and equipped with at least one wheel (8, 8') and, on the other hand, a coupling head (16) with a support arm (4) and a three-point hitching device (5, 5', 5") for coupling it to a tractor vehicle,
the frame (2) comprising two groups of plowbodies (3, 3'), arranged on either side for right-hand or left-hand plowing respectively in relation to the direction of advance (A), and being connected to the support arm (4) by a pivot connection (6) defining a reversing axis (AR) for reversible switching from one working configuration to the other, by pivoting approximately half a turn, preferably under the effect of an actuator (7),
the said plow (1) also being transposable, by rotating the frame (2) by approximately a quarter turn around the reversing axis (AR), from one of the working configurations, to the transport configuration in which the upper hitching point (5) is movable in relation to the support arm (4) and in which the plow (1) can be towed by traction at the two lower hitching points (5', 5") and rolling, supported by the said at least one wheel (8),
the said plow (1) also comprising a first means (9) for locking in position the upper hitching point (5) in relation to the support arm (4) and a second means (10) for locking in rotation the pivot connection (6), and therefore the rotation of the frame (2), with locking means are engaged or disengaged depending on whether the plow (1) is in one of the working configurations or in the transport configuration,
plow (1) **characterized in that** it further comprises a device (11) for common control of the engaged/disengaged state of the said first and second locking means (9 and 10), this device (11) being configured so as to define a sequence of operations for actuating or releasing the said first and second locking means (9 and 10) respectively towards their engaged state or their disengaged state according to the desired configuration of the plow (1).

2. Plow according to claim 1, **characterized in that** the device for common control (11) comprises an operating mechanism, articulated and mounted on the support arm (4), with a primary handling element (12), with two secondary actuating or release elements (9', 10'), respectively for the first and second locking means (9 and 10), and with a central part (13) providing the kinematic linkage between the primary element (12) and the two secondary elements (9', 10').

3. Plow according to claim 2, **characterized in that** the central part (13) incorporates an operational control delay, for example in the form of a kinematic dead band, setting the sequence of the actuation or release operations of the said first and second locking means (9 and 10), the latter advantageously being in the form of locks.

4. Plow according to any of claims 1 to 3, **characterized in that** the device for common control (11) is configured to be able to assume three distinct states, corresponding to three respectively corresponding positions of the primary handling element (12), namely, based on successive discrete positions of the said primary handling element (12): a first state associated with the working configuration and in which the first locking means (9) is engaged and the second locking means (10) is disengaged; a second neutral or transitional intermediate state in which the second locking means (10) is engaged and the first locking means (9) remains engaged; and, finally, a third state associated with the transport configuration and in which the first locking means (9) is disengaged and the second locking means (10) is engaged, the first state being associated with a working configuration of the plow (1) and the third state being associated with the transport configuration of the said plow (1).

5. Plow according to any one of claims 1 to 4, **characterized in that** the support arm (4) comprises two component parts (4' and 4"), namely a rear part (4') forming a fixed support arm chassis and a front part (4") forming an articulated arm which pivots with the rear part (4') and carrying the upper hitching point (5), with these two parts (4' and 4") able to be selectively and rigidly connected by the first locking means (9), the latter taking the form of a handle or cap pivotally mounted on the rear part (4'), capable of mutually securing the rear and front parts (4' and 4") opposite their pivot articulation (4") and able to be moved between its engaged and disengaged states under the action of a corresponding secondary element (9') forming part of the device for common control (11).

6. Plow according to any one of claims 1 to 5, **characterized in that** the second locking means (10) consists of a lock, for example a pivoting lock, active in its engaged state, in which it prevents any rotation around the reversing axis (AR), under the effect of its weight or an elastic means, and moved in its disengaged state under the action of a corresponding element (10') forming part of the device for common control (11), for example a rotary cam, with the actuator (7) possibly present being advantageously connected to the frame (2) by a connecting rod (14), and the second locking means (10) locking the said connecting rod (14) in position in its engaged state.

7. Plow according to claims 5 and 6, **characterized in that** the device for common control (11) comprises an operating mechanism incorporating: i) a handling element (12) in the form of a lever or handle, which can be positioned and held in three discrete positions, ii) a tie rod (9') connected to the first locking means (9) in the form of a swivel handle configured to mutually rigidly fasten, in its engaged state, the rear and front parts (4' and 4") of the said support arm (4), iii) a rotary cam (10') configured and arranged to interact with the lock for locking in rotation of the frame (2) around the reversing axis (AR) in order to extract it from its default engaged state, and iiii) a central part (13) on which the lever or the handle (12) is mounted, and which is kinematically connected to the tie rod (9') and to the cam (10'), the said central part (13) being fixed with the possibility of rotation on the rear part (4') of the support arm (4).

8. Plow according to claim 7, **characterized in that** the rotation axis of the cam (10') coincides with the rotation axis (AR') of the central part (13), **in that** the latter takes the form of a cut-out plate, whose plane is perpendicular to the said rotation axis (AR'), and **in that** the tie rod (9') is kinematically connected to the said plate (13) at an oblong hole (13'), in which the said tie rod (9') can circulate, forming a kinematic dead band generating a delay in the transmission of movement during the rotational displacement of the said plate (13) under the effect of the lever or handle (12).

9. Plow according to claims 4 and 7, **characterized in that** the support arm (4) has notches or indentations (15) for receiving the operating lever (12) in its three positions, corresponding to the three possible states of the device for common control (11).

10. Plow according to any of claims 1 to 9, **characterized in that** the primary handling element (12) is elastically stressed towards a position corresponding to a state of the device for common control (11) in which the first and second locking means (9 and 10) are both engaged.

11. Plow according to any of claims 1 to 10, **characterized in that** the coupling head (16) comprises a hitching crossbar (17') forming a spreader, and also a rotation locking device (17) for this hitching crossbar (17'), preferably with two locks and a single control, and/or an automatic translational locking device (18) for the said crossbar (17').
